# EUROPEAN PATENT APPLICATION

(11) **EP 2 897 348 A1**
(43) Date of publication of application: **22.07.2015**
(21) Application number: 15150803.3
(22) Date of filing: 12.01.2015
(51) Int. Cl.: H04L 29/14, H04L 29/06

(54) **Stateful connection failure mitigation method and system**

(30) Priority: 10.01.2014 US 201461926198 P
(71) Applicant: Data Accelerator Limited, London W12 7SB (GB)
(72) Inventor: CORBETT, Sean P., London, NW10 5JA (GB); CLOTHIER, Matthew P., Chedzoy, Somerset TA7 8RE (GB)
(74) Representative: Dendorfer, Claus

(57) **Abstract**

Systems and methods for virtualizing a stateful connection created through a connection virtualization system between a client device and a data provider system. Responses and requests sent over the stateful connection are intercepted and stored in a local datastore. A connection detection engine determines whether the stateful connection remains intact between the client device and the data provider system. Deployment instructions are generated based on whether the stateful connection is intact and locally stored intercepted requests and responses are sent to appropriate recipients based on the deployment instructions.

## Description

### CROSS REFERENCE TO RELATED APPLICATION

This application claims the priority of United States Provisional Application No. 61/926,198 filed January 10, 2014, which is hereby incorporated by reference.

### BACKGROUND

As computers and client devices have become more advanced so to have varying types of data and the sizes of varying type of data used and accessed by computers and client devices. Additionally as various types of data have grown in size networks have grown and become more capable of handling the transfer of data of larger sizes. Specifically, entire applications or operating systems can be transferred to computers or client devices through a network.

While networks have become more capable of handling the transferring of data of large sizes, problems still exist with the efficient transfer of data to computers and client devices over networks. Additionally, problems exist with transferring data over stateful connections that become torn down or terminated, and subsequently broken, as the data is transferred. Specifically, in one example, connections are torn down and re-established as connections and computing or data serving tasks are moved between server farms, or servers within a server farm.

Other limitations of the relevant art will become apparent to those of skill in the art upon a reading of the specification and a study of the drawings.

### SUMMARY

The following implementations and aspects thereof are described and illustrated in conjunction with systems, tools, and methods that are meant to be exemplary and illustrative, not necessarily limiting in scope. In various implementations one or more of the above-described problems have been addressed, while other implementations are directed to other improvements.

The various implementations relate to virtualizing a stateful connection created through a connection virtualization system between a client device and a data provider system. Responses and requests sent over the stateful connection are intercepted and stored in a local datastore. A connection detection engine determines whether the stateful connection remains intact between the client device and the data provider system. Deployment instructions are generated based on whether the stateful connection is intact and locally stored intercepted requests and responses are sent to appropriate recipients based on the deployment instructions.

These and other advantages will become apparent to those skilled in the relevant art upon a reading of the following descriptions and a study of the several examples of the drawings.

### BRIEF DESCRIPTION OF THE DRAWINGS

FIG. 1 depicts a diagram of an example of a system for creating a virtualized connection.
FIG. 2 depicts a diagram of another example of a system for creating a virtualized connection.
FIG. 3 depicts a diagram of an example of a system for generating deployment instructions and deploying locally stored intercepted requests and responses based on the deployment instructions.
FIG. 4 depicts a diagram of an example of a system in which a connection is re-established for which a virtualized connection is created.
FIG. 5 depicts a flowchart of an example of a method for establishing a connection using a connection virtualization system that is implemented as an intermediate node in establishing the connection.
FIG. 6 depicts a flowchart of an example of a method for creating a virtualized connection.
FIG. 7 depicts a flowchart of an example of a method for re-establishing a connection using a connection virtualization system.

### DETAILED DESCRIPTION

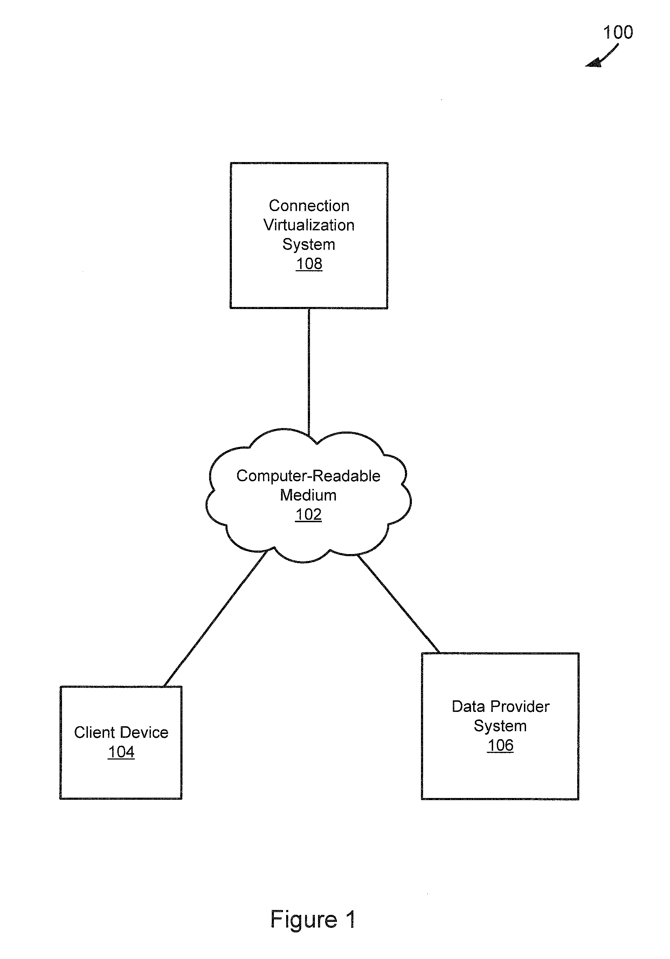

FIG. 1 depicts a diagram 100 of an example of a system for creating a virtualized connection. The example system shown in FIG. 1 includes a computer-readable medium 102, client device 104, a data provider system 106, and a connection virtualization system 108.

The client device 104, the data provider system 106, and the connection virtualization system 108 are coupled to each other through the computer-readable medium 102. As used in this paper, a "computer-readable medium" is intended to include all mediums that are statutory (e.g., in the United States, under 35 U.S.C. 101), and to specifically exclude all mediums that are non-statutory in nature to the extent that the exclusion is necessary for a claim that includes the computer-readable medium to be valid. Known statutory computer-readable mediums include hardware (e.g., registers, random access memory (RAM), non-volatile (NV) storage, to name a few), but may or may not be limited to hardware.

The computer-readable medium 102 is intended to represent a variety of potentially applicable technologies. For example, the computer-readable medium 102 can be used to form a network or part of a network. Where two components are co-located on a device, the computer-readable medium 102 can include a bus or other data conduit or plane. Where a first component is co-located on one device and a second component is located on a different device, the computer-readable medium 102 can include a wireless or wired back-end network or LAN. The computer-readable medium 102 can also encompass a relevant portion of a WAN or other network, if applicable.

The computer-readable medium 102, the client device 104, the data provider system 106, the connection virtualization system 108, and other systems, or devices described in this paper can be implemented as a computer system or parts of a computer system or a plurality of computer systems. A computer system, as used in this paper, is intended to be construed broadly and can include or be implemented as a specific purpose computer system for carrying out the functionalities described in this paper. In general, a computer system will include a processor, memory, non-volatile storage, and an interface. A typical computer system will usually include at least a processor, memory, and a device (e.g., a bus) coupling the memory to the processor. The processor can be, for example, a general-purpose central processing unit (CPU), such as a microprocessor, or a special-purpose processor, such as a microcontroller.

The memory can include, by way of example but not limitation, random access memory (RAM), such as dynamic RAM (DRAM) and static RAM (SRAM). The memory can be local, remote, or distributed. The bus can also couple the processor to non-volatile storage. The non-volatile storage is often a magnetic floppy or hard disk, a magnetic-optical disk, an optical disk, a read-only memory (ROM), such as a CD-ROM, EPROM, or EEPROM, a magnetic or optical card, or another form of storage for large amounts of data. Some of this data is often written, by a direct memory access process, into memory during execution of software on the computer system. The non-volatile storage can be local, remote, or distributed. The non-volatile storage is optional because systems can be created with all applicable data available in memory.

Software is typically stored in the non-volatile storage. Indeed, for large programs, it may not even be possible to store the entire program in the memory. Nevertheless, it should be understood that for software to run, if necessary, it is moved to a computer-readable location appropriate for processing, and for illustrative purposes, that location is referred to as the memory in this paper. Even when software is moved to the memory for execution, the processor will typically make use of hardware registers to store values associated with the software, and local cache that, ideally, serves to speed up execution. As used herein, a software program is assumed to be stored at an applicable known or convenient location (from non-volatile storage to hardware registers) when the software program is referred to as "implemented in a computer-readable storage medium." A processor is considered to be "configured to execute a program" when at least one value associated with the program is stored in a register readable by the processor.

In one example of operation, a computer system can be controlled by operating system software, which is a software program that includes a file management system, such as a disk operating system. One example of operating system software with associated file management system software is the family of operating systems known as Windows® from Microsoft Corporation of Redmond, Washington, and their associated file management systems. Another example of operating system software with its associated file management system software is the Linux operating system and its associated file management system. The file management system is typically stored in the non-volatile storage and causes the processor to execute the various acts required by the operating system to input and output data and to store data in the memory, including storing files on the non-volatile storage.

The bus can also couple the processor to the interface. The interface can include one or more input and/or output (I/O) devices. The I/O devices can include, by way of example but not limitation, a keyboard, a mouse or other pointing device, disk drives, printers, a scanner, and other I/O devices, including a display device. The display device can include, by way of example but not limitation, a cathode ray tube (CRT), liquid crystal display (LCD), or some other applicable known or convenient display device. The interface can include one or more of a modem or network interface. It will be appreciated that a modem or network interface can be considered to be part of the computer system. The interface can include an analog modem, isdn modem, cable modem, token ring interface, satellite transmission interface (e.g. "direct PC"), or other interfaces for coupling a computer system to other computer systems. Interfaces enable computer systems and other devices to be coupled together in a network.

The computer systems can be compatible with or implemented as part of or through a cloud-based computing system. As used in this paper, a cloud-based computing system is a system that provides virtualized computing resources, software and/or information to client devices. The computing resources, software and/or information can be virtualized by maintaining centralized services and resources that the edge devices can access over a communication interface, such as a network. "Cloud" may be a marketing term and for the purposes of this paper can include any of the networks described herein. The cloud-based computing system can involve a subscription for services or use a utility pricing model. Users can access the protocols of the cloud-based computing system through a web browser or other container application located on their client device.

A computer system can be implemented as an engine, as part of an engine or through multiple engines. As used in this paper, an engine includes at least two components: 1) a dedicated or shared processor and 2) hardware, firmware, and/or software modules that are executed by the processor. Depending upon implementation-specific, configuration-specific, or other considerations, an engine can be centralized or its functionality distributed. An engine can be a specific purpose engine that includes specific purpose hardware, firmware, or software embodied in a computer-readable medium for execution by the processor. The processor transforms data into new data using implemented data structures and methods, such as is described with reference to the FIGs. in this paper.

The engines described in this paper, or the engines through which the systems and devices described in this paper can be implemented, can be cloud-based engines. As used in this paper, a cloud-based engine is an engine that can run applications and/or functionalities using a cloud-based computing system. All or portions of the applications and/or functionalities can be distributed across multiple computing devices, and need not be restricted to only one computing device. In some embodiments, the cloud-based engines can execute functionalities and/or modules that end users access through a web browser or container application without having the functionalities and/or modules installed locally on the end-users' computing devices.

As used in this paper, datastores are intended to include repositories having any applicable organization of data, including tables, comma-separated values (CSV) files, traditional databases (e.g., SQL), or other applicable known or convenient organizational formats. Datastores can be implemented, for example, as software embodied in a physical computer-readable medium on a general- or specific-purpose machine, in firmware, in hardware, in a combination thereof, or in an applicable known or convenient device or system. Datastore-associated components, such as database interfaces, can be considered "part of" a datastore, part of some other system component, or a combination thereof, though the physical location and other characteristics of datastore-associated components is not critical for an understanding of the techniques described in this paper.

Datastores can include data structures. As used in this paper, a data structure is associated with a particular way of storing and organizing data in a computer so that it can be used efficiently within a given context. Data structures are generally based on the ability of a computer to fetch and store data at any place in its memory, specified by an address, a bit string that can be itself stored in memory and manipulated by the program. Thus, some data structures are based on computing the addresses of data items with arithmetic operations; while other data structures are based on storing addresses of data items within the structure itself. Many data structures use both principles, sometimes combined in non-trivial ways. The implementation of a data structure usually entails writing a set of procedures that create and manipulate instances of that structure. The datastores, described in this paper, can be cloud-based datastores. A cloud-based datastore is a datastore that is compatible with cloud-based computing systems and engines.

In a specific implementation, the client device 104 functions to send and receive data. In sending and receiving data, the client device 104 can function to generate and send requests and responses to requests. Further in sending and receiving data, the client device 104 can function to receive requests and responses to requests. In one example, the client device 104 receives requests and responses to requests from the data provider system 106. In generating and sending requests and receiving responses to requests, the client device 104 can function to generate and send requests for data and receive requested data in response to the generated and sent requests for data. As is used in this paper, requests generated, sent, and received by the client device 104 can include requests for data, connection requests, and connection termination requests. Depending upon implementation-specific, configuration-specific, or other considerations, data received by the client device 104 includes streamed applications or operating systems, or portions of streamed applications or operating systems. Further depending upon implementation-specific, configuration-specific, or other considerations, the client device 104 can receive data for streamed applications or operating systems that are virtualized on the client device 104. The client device 104 can be a thin client device or an ultra-thin client device. In sending and receiving the data, the client device 104 can include a wireless network interface, through which a wireless connection is formed that couples the client device 104 to the computer-readable medium 102. Further, the client device 104 can send and receive data wirelessly over a wireless connection formed between the client device 104 and the computer-readable medium.

In a specific implementation, the client device 104 functions to send and receive data in accordance with a stateful communication protocol. In sending and receiving data in accordance with a stateful communication protocol, the client device 104 can generate and send requests and responses to requests in accordance with the stateful communication protocol. Further in sending and receiving data in accordance with a stateful communication protocol, the client device 104 functions to receive requests and responses to requests in accordance with the stateful communication protocol. Further in sending and receiving data, the client device 104 can receive requests and responses to requests in accordance with a stateful communication protocol from the data provider system 106. In an example, the client device 104 functions to send and receive data in accordance with the transmission control protocol (hereinafter referred to as "TCP").

A stateful communication protocol, as is used in this paper, is a communication protocol in which a device or system, such as the client device 104 and/or the data provider system 106 records instances of interactions between the client device 104 and the data provider system 106 during a lifetime of a connection created and maintained in accordance with the stateful communication protocol. Interactions between the client device 104 and the data provider system 106 can include requests and responses to the requests generated by either or both the client device 104 and the data provider system 106. For example, the instances can include requests for data generated by the client device 104 and responses to the requests for data generated by the data provider system 106. Depending upon implementation-specific, configuration-specific, or other considerations, recorded instances of interactions made in accordance with a stateful communication protocol can further affect how requests for data and responses are handled, or otherwise processed, during a lifetime of a connection created and maintained in accordance with the stateful communication protocol.

In a specific implementation, the data provider system 106 functions to send and receive data. The data provider system 106 can be implemented as one or a plurality of data servers that are implemented in the cloud as cloud-based servers. Specifically, the data provider system 106 can include a plurality of data servers with data provided for by the data provider system 106 distributed across them. Data servers, through which the data provider system 106 is implemented, can include servers of an applicable type based on type of data that are provided by the data provider system 106. For example, data servers that the data provider system 106 is implemented through, can be database servers, file servers, mail servers, print servers, web servers, gaming servers, application servers, or operating system servers.

In a specific implementation, the data provider system 106 sends data to the client device 104 and receives data from the client device 104. In sending data to and receiving data from the client device 104, the data provider system 106 can generate and send requests and responses to requests to the client device 104. Further in sending data to and receiving data from the client device 104, the data provider system 106 can receive requests and responses to requests form the client device 104. For example, the data provider system 106 can generate and send responses to the client device 104 in reply to requests generated by the client device 104. As is used in this paper, responses generated, sent, and received by the data provider system 106 can include responses to requests for data, acknowledgement responses, and connection termination acknowledgment responses. Responses to requests for data sent by the data provider system 106 to the client device 104 include data requested by the client device 104 in requests for data. Depending upon implementation-specific, configuration-specific, or other considerations, data included as part of responses sent by the data provider system 106 can include values or variables used by software, such as an application or operating system, in execution of the software on the client device 104. Further depending upon implementation-specific, configuration-specific, or other considerations, data included as part of the responses sent by the data provider system 106 includes executable computer code. Executable computer code can include software for applications or operating system. In one example, the code is executed on the client device 104 after it is sent to the client device 104. In another example, the code is executed in a cloud based system associated with the client device 104 to create results of the execution of the code in the cloud based system that are then sent to the client device 104.

In a specific implementation, the data provider system 106 generates, sends, and receives data in accordance with a stateful communication protocol, such as TCP. In sending data to and receiving data from the client device 104 in accordance with a stateful communication protocol, the data provider system 106 can generate and send requests and responses to re quests to the client device 104 in accordance with the stateful communication protocol. Further in sending data to and receiving data from the client device 104 in accordance with a stateful communication protocol, the data provider system 106 can receive requests and responses to requests form the client device 104 in accordance with the stateful communication protocol.

In a specific implementation, the data provider system 106 generates, sends, and receives data in accordance with a stateful communication protocol during a connection session for a connection. A connection session for a connection is the time during which the connection is established and maintained between the client device 104 and the data provider system 106 using a stateful communication protocol.

In a specific implementation, the data provider system 106 generates, sends, and receives data in accordance with a stateful communication protocol as a connection between the client device 104 and the data provider system 106 is broken and a new connection is created during a new connection session. In an example, a first session connection is created that corresponds to the first connection between the client device 104 and the data provider system 106 and a second session connection is created for a second connection between the client device 104 and the data provider system 106 after the first connection is subsequently broken and the second connection is created. A connection session can be broken before all requests and responses to requests are generated and sent by the data provider system 108 during the connection session. Additionally, a connections session can be broken before all requests and responses to requests generated by the client device 104 during the connection session are received by the data provider system 106 during the connection session.

In a specific implementation, the connection virtualization system 108 functions to generate a virtualized connection of a connection established between the client device 104 and the data provider system 106. Depending upon implementation-specific, configuration-specific, or other considerations, the connection established between the client device 104 and the data provider system 106, for which the connection virtualization system 108 creates a virtualized connection, is established and maintained in accordance with a stateful communications protocol, such as TCP. In creating a virtualized connection between the client device 104 and the data provider system 106, the connection virtualization system 108 serves as an intermediate node in a connection formed between the client device 104 and the data provider system 106.

In a specific implementation, in serving as an intermediate node in a connection between the client device 104 and the data provider system 106, the connection virtualization system 108 intercepts requests and responses sent between the client device 104 and the data provider system 106. In intercepting requests and responses, the connection virtualization system can intercept requests and responses generated by the client device 104 as the requests and responses are sent to the data provider system 106, through the connection virtualization system 108. Further in intercepting requests and response, the connection virtualization system can intercept requests and responses generated by the data provider system 106 as the requests and responses are sent to the client device 104 through the connection virtualization system 108.

In a specific implementation, the connection virtualization system 108 stores intercepted requests and responses locally. In storing intercepted requests and responses locally, the connection virtualization system 108 can store intercepted requests and responses in a local datastore that is included as part of or within the same LAN as the connection virtualization system 108. Additionally, in storing intercepted requests and responses locally, the connection virtualization system 108 can store intercepted requests and responses in a local datastore that is included as part of or within the same LAN as the client device 104.

In a specific implementation, the connection virtualization system 108, in creating a virtualized connection by serving as an intermediate node, sends locally stored requests and responses to appropriate recipients when a connection exists between the connection virtualization system 108 and the appropriate recipient during a connection session. As is used in this paper, an appropriate recipient can include either or both the client device 104 and the data provider system 106. In one example, an appropriate recipient is the data provider system 106 when a client device generates a request for data. In another example, an appropriate recipient is the client device 104 when a data provider system 106 generates a response to a request for data generated by the client device 104. The connection virtualization system 108 can send locally stored requests and responses to appropriate recipients in a same connection session in which the locally stored requests and the responses are intercepted and stored locally.

In a specific implementation, in creating a virtualized connection, the connection virtualization system 108 sends locally stored requests and responses, intercepted during a previous connection session, to an appropriate recipient after the previous connection session has ended and a new connection is formed during a new connection session. A connection session can end as a result of a connection between the client device 104 and the data provider system 106 breaking and a new connection being established during a new connection session. A connection session can also end when a portion of a connection is broken, e.g. a connection between the client device 104 and the connection virtualization system 108 and a connection between the connection virtualization system 108 and the data provider system 106. In an example, if the connection virtualization system 108 intercepts and locally stores requests from the client device 104, but either or both cannot send the requests to or does not receive responses from the data provider system 106 because the connection between the client device 104 and the data provider system 106 is broken, then the connection virtualization system 108 can resend the locally stored requests to the data provider system 106 once a new connection has been established between the client device 104 and the data provider system 106.

In a specific implementation, the connection virtualization system 108 sends locally stored requests and responses to appropriate recipients, such that the appropriate recipient or a user associated with the appropriate recipient is agnostic as to when the requests and the responses are intercepted by the connection virtualization system 108. The connection virtualization system 108 can send locally stored requests and responses to an appropriate recipient, such that the appropriate recipient or a user associated with the appropriate recipient including is agnostic as to a specific connection session in which the locally stored requests and responses were intercepted. Additionally, the connection virtualization system 108 can send locally stored requests and responses to an appropriate recipient, such that the appropriate recipient or a user associated with the appropriate recipient is agnostic as to whether the requests or responses were received during a previous connection session for a connection that was broken. In one example, if the connection virtualization system 108 intercept and locally stores a response to a request for data from the data provider system 106 and the connection between the client device 104 and the connection virtualization system 108 is broken, the connection virtualization system 108 can send the intercepted and locally stored response to the client device 104 once a new connection is established, corresponding to a new connection session, without the client device 104 and/or a user of the client device 104 knowing that a connection between the client device 104 and the data provider system 108 was broken. Similarly, in another example, if the connection virtualization system 108 intercepts and locally stores a request for data from the client device 104 and the connection between the client device 104 and the data provider system 106 is broken either or both before the connection virtualization system 108 can send the request for data to the data provider system 106 or the data provider system 106 can send a response to the request for data back to the connection virtualization system 108, then the connection virtualization system 108 can send or resend the intercepted and locally stored request for data to the data provider system 106 without the data provider system 106 knowing that a connection between the client device 104 and the data provider system 106 was broken. As a result, the connection between the client device 104 and the data provider system 106 can be virtualized by the connection virtualization system 108 as an appropriate recipient is agnostic as to what connection session a requests and responses are intercepted in and whether the connection between the client device 104 and the data provider system 106 broke and a new connection is re-established.

In an example of operation of the example system shown in FIG. 1, the client device 104 functions to generate data including requests and responses. Further in the example of operation, the data provider system 106 generates data including requests and responses to requests generated by the client device 104. Requests and responses to requests are sent between the client device 104 and the data provider system 106 through a connection established between the client device 104 and the data provider system 106 in accordance with a stateful communication protocol. Still in the example of operation, the connection virtualization system 108 creates a virtualized connection of a connection formed between the client device 104 and the data provider system 106 by serving as an intermediate node in the connection formed between the client device 104 and the data provider system 106. Still further in the example of operation, the connection virtualization system 108 intercepts requests and responses to requests and stores the intercepted requests and responses locally. Additionally in the example of operation, the connection virtualization system 108 sends and/or resends intercepted requests and responses when a connection between the client device 104 and the data provider system 106 is broken and a new connection is established corresponding to a new connection session. Further in the example of operation, the connection virtualization system 108 sends and/or resends intercepted requests and responses to the client device 104 and/or the data provider system 106, such that the client device 104 and/or the data provider system 106 are agnostic as to when the requests and responses were intercepted and whether a connection between the client device 104 and the data provider system 106 was broken and then re-established.

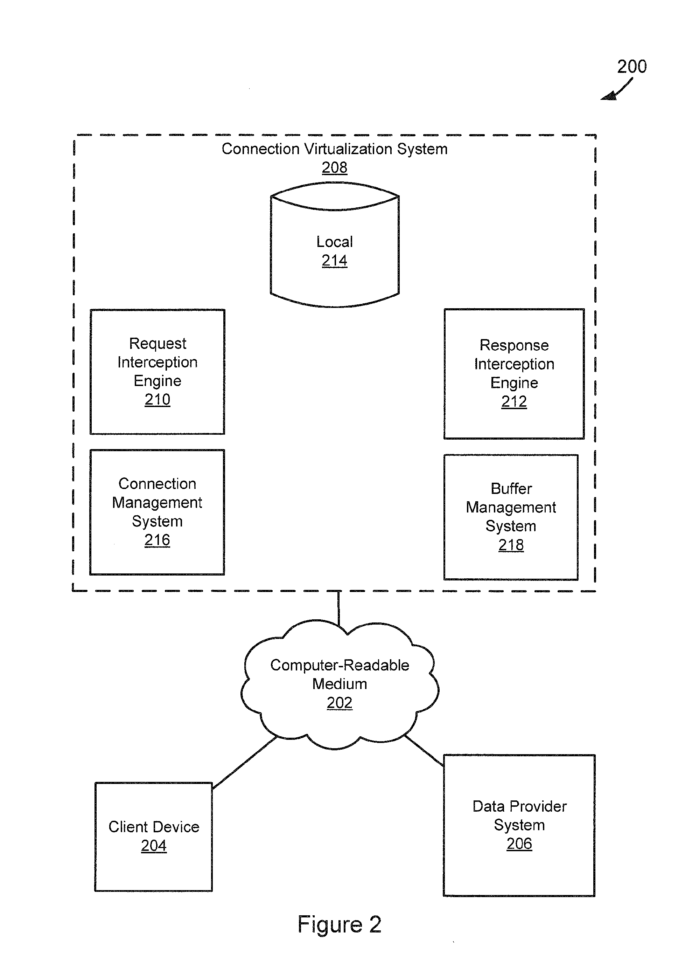

FIG. 2 depicts a diagram 200 of another example of a system for creating a virtualized connection. The example system shown in FIG. 2 includes a computer-readable medium 202, a client device 204, a data provider system 206, and a connection virtualization system 208. The client device 204, the data provider system 206, and the connection virtualization system 208 are coupled to each other through the computer-readable medium 202.

In a specific implementation, the client device 204 functions according to an applicable device for generating, sending, and receiving data, such as the client devices described in this paper. Depending upon implementation-specific, configuration-specific, or other considerations, the client device 204 generates, sends, and receives data over a connection established in accordance with a stateful communication protocol, such as TCP. For example, the client device 204 generates and sends requests and responses in accordance with a stateful communications protocol. In another example, the client device 204 receives requests and responses in accordance with a stateful communication protocol.

In a specific implementation, the data provider system 206 functions according to an applicable system for generating, sending, and receiving data, such as the data provider systems described in this paper. Depending upon implementation-specific, configuration-specific, or other considerations, the data provider system 206 generates, sends, and receives data over a connection established according to a stateful communication protocol, such as TCP. In one example, the data provider system 206 receives requests and responses in accordance with a stateful communication protocol. In another example, the data provider system 206 generates and sends requests and responses in accordance with a stateful communication protocol.

In a specific implementation, the connection virtualization system 208 functions according to an applicable system for creating a virtualized connection, such as the connection virtualization systems described in this paper. The connection virtualization system 208 can be implemented as an intermediate node in a connection formed between the client device 204 and the data provider system 206. The connection virtualization system 208 includes a request interception engine 210, a response interception engine 212, a local datastore 214, a connection management system 216, and a buffer management system 218.

In a specific implementation, the request interception engine 210 functions to intercept requests for data. The request interception engine 210 can intercept requests for data generated by and sent from the client device 204. For example, if the client device 204 generates a request for data needed to run an application on the client device 204, the request interception engine 210 can intercept the request for data as it is in route to the data provider system 206.

In a specific implementation, the request interception engine 210 intercepts connection requests. The request interception engine 210 can intercept connection requests generated by either or both the client device 204 and the data provider system 206. A connection request can be used in creating a connection between the client device 204 and the data provider system 206 according to a stateful communication protocol, such as TCP. A connection request can also be used in creating an active open connection after a passive open connection is established at the data provider system 206. Additionally, a connection request can be used in creating an active open connection as part of a three-way handshake according to TCP. In one example, an intercepted connection request is a SYN request used for establishing an active open connection. In being a SYN request, a connection request can includes a sequence number that is a random value set by the client device 204 or the data provider system 206 that generates and sends the connection request.

In a specific implementation, the request interception engine 210 intercepts connection termination requests. The request interception engine 210 can intercept connection termination requests generated by either or both the client device 204 and the data provider system 206. A connection termination requests can be used in terminating a connection in accordance with a stateful communication protocol, such as TCP. In one example, a connection termination request is a FIN packet. A connection termination requests can also be used to passively close a connection. Additionally, a connection termination request can be used in terminating an active open connection as part of a four-way handshake according to TCP. A connection termination request can also be used in terminating an active open connection as part of a three-way handshake according to TCP.

In a specific implementation, the response interception engine 212 functions to intercept responses to requests for data. The response interception engine 212 can intercept responses to requests for data generated and sent by either or both the data provider system 206 and the client device 204. In one example, if the data provider system 206 sends a response that includes data that was requested in a request for data generated by the client device 204, then the response interception engine 212 can intercept the response to the requests for data that includes the requested data. Intercepted responses to requests for data can include TCP segments, in accordance with TCP.

In a specific implementation, the response interception engine 212 functions to intercept acknowledgement responses. The response interception engine 212 can intercept acknowledgement responses generated and sent by either or both the data provider system 206 and the client device 204. Acknowledgment responses intercepted by the response interception engine 212 can be used in creating a connection between the client device 204 and the data provider system 206 according to a stateful communication protocol, such as TCP. In one example, acknowledgment responses are used in creating an active open connection after a passive open connection is established at either or both the data provider system 206 and the client device 204. Acknowledgment responses can be used in creating an active open connection according to TCP as part of a three-way handshake. In one example, an acknowledgment response is a SYN acknowledgment. A SYN acknowledgment can include a sequence number that is a random number and an acknowledgment number that is one more than the sequence number in the corresponding SYN request of the SYN acknowledgment. In another example, an acknowledgment response is an acknowledgment generated and sent in response to a received SYN acknowledgment. An acknowledgment response, in being an acknowledgement to a corresponding received SYN acknowledgment, can include a sequence number that is the same as the acknowledgment number of the corresponding SYN acknowledgment and an acknowledgment number that is one more than the sequence number of the corresponding SYN acknowledgment.

In a specific implementation, the response interception engine 212 intercepts connection termination acknowledgment responses. The response interception engine 212 can intercept connection termination acknowledgment responses generated and sent by either or both the client device 204 and the data provider system 206. Connection termination acknowledgment responses can be used in terminating a connection in accordance with a stateful communication protocol, such as TCP. Connection termination acknowledgment responses can also be used to passively close a connection. Additionally, connection termination acknowledgment responses can be used in terminating an active open connection as part of a four-way handshake according to TCP. Furthermore, connection termination acknowledgment responses can be used in terminating an active open connection as part of a three-way handshake according to TCP.

In a specific implementation, either or both the request interception engine 210 and the response interception engine 212 are implemented as or part of one or a plurality of packet sniffers. In being implemented as part of one or a plurality of packet sniffers, the request interception engine 210 and the response interception engine 212 can determine which responses or requests to intercept based on a protocol data unit (hereinafter referred to as "PDU"), that is included as part of or comprises a response or request. A PDU can be a packet and the request interception engine 210 and the response interception engine 212 can determine to intercept a request or a response based on the source and/or destination indicated in the header of packet. Additionally, A PDU can be a TCP segment that includes a TCP header and the request interception engine 210 and the response interception engine 212 can determine to intercept the segment based on the source and/or destination indicated in the TCP header of the segment. The request interception engine 210 and the response interception engine 212 can determine which responses or requests to intercept based on a body of a PDU that is included as part of or comprises a response or request. For example, the request interception engine 210 and the response interception engine 212 can intercept a response or a request based on the type of data that is contained within a body of a PDU that is included as part of or comprises the response or the request.

In a specific implementation, the local datastore 214 is integrated as part of the connection virtualization system 208. For example, the local datastore 214 can be within the same LAN as the connection virtualization system 208. In another implementation, the local datastore 214 is integrated as part of the client device 204. For example, the local datastore 214 can be within the same LAN as the client device 204.

In a specific implementation, the request interception engine 210 and the response interception engine 212 function to store corresponding intercepted requests and responses in the local datastore 214. In one example, the request interception engine 210 stores an intercepted request in the local datastore 214. In another example, the response interception engine 212 stores an intercepted response in the local datastore 214.

In a specific implementation, the buffer management system 218 functions to manage requests and responses that are intercepted by the request interception engine 210 and the response interception engine 212 and stored in the local datastore 214. In managing requests and response stored in the local datastore 214, the buffer management system 218 can send intercepted requests and responses stored in the local datastore 214 to appropriate recipients. The buffer management system 218 can send intercepted requests and responses to appropriate recipients based on deployment instructions generated by and received from the connection management system 216. The buffer management system 218 can also automatically send intercepted requests and responses stored in the local datastore 214 to appropriate recipients without deployment instructions from the connection management system. For example, the buffer management system 218 can automatically send a request generated by and sent from the client device 204 to the data provider system 206 after it is intercepted by the request interception engine 210 and stored in the local datastore 214.

In a specific implementation, the connection management system 216 functions to manage a connection between the client device 204 and the data provider system 206, in which the connection virtualization system 208 is an intermediate node. In managing the connection formed between the client device 204 and the data provider system 206, the connection management system 216 can manage a connection formed between the client device 204 and the connection virtualization system 208. Further in managing the connection formed between the client device 204 and the data provider system 206, the connection management system 216 can manage a connection formed between the connection virtualization system 208 and the data provider system 206.

In a specific implementation, in managing a connection between the client device 204 and the data provider system 206, the connection management system 216 functions to determine whether the connection between the client device 204 and the data provider system 206 remains intact. The connection management system 216 can determine whether a connection formed between the client device 204 and the data provider system 206 remains intact by monitoring a portion of the connection formed between the client device 204 and the connection virtualization system 208. The connection management system 216 can also determine whether a connection formed between the client device 204 and the data provider system 206 remains intact by monitoring a portion of the connection formed between the connection virtualization system 208 and the data provider system 206.

In a specific implementation, the connection management system 216 functions to generate deployment instructions. Deployment instructions can instruct the buffer management system 218 to retrieve locally stored responses and requests from the local datastore 214. Deployment instructions can also instruct the buffer management system 218 to send or deploy locally stored retrieved requests and responses to appropriate recipients. Additionally, deployment instructions can indicate which specific locally stored responses and requests for the buffer management system 218 to retrieve from the local datastore and which specific appropriate recipients to which to deploy the locally stored responses and requests. In one example, deployment instructions indicate locally stored responses and requests that were not received by appropriate recipients. In another example, deployment instructions indicate locally stored requests and responses for which corresponding responses were not received from the appropriate recipient of the requests and responses. Deployment instructions can be connection establishment deployment instructions that indicate requests and response used in establishing a connection between the client device 204 and the data provider system 206. Additionally deployment instructions can include the deployment order in which the buffer management system 218 should send retrieved requests and responses to appropriate recipients. In an example, a deployment order specified by deployment instructions is based, at least in part, on the order in which requests and responses are intercepted by the corresponding request interception engine 210 and response interception engine 212.

In a specific implementation, the connection management system 216 generates deployment instructions based on a determination of whether a connection between the client device 204 and the data provider system 206 remains intact or has been established. The connection management system 216 can generate deployment instructions that are connection establishment deployment instructions that instruct the buffer management system to deploy or re-deploy requests and/or responses used in establishing a connection between the client device 204 and the data provider system 206 based on if it is determined that a connection is broken or has not been established. Additionally, the connection management system 216 can generate deployment instructions that instruct the buffer management system 218 to send requests and/or responses used in re-establishing a half-open connection between the client device 204 and the data provider system 206. Furthermore, the connection management system 216 can generate deployment instructions that instruct the buffer management system 218 to send requests and/or responses used in re-establishing a half-closed connection between the client device 204 and the data provider system 206. Deployment instructions generated by the connection management system 216 can instruct the buffer management system 218 to send requests and/or responses after a connection is re-established once it is determined that the connection has broken. For example, deployment instructions can instruct the buffer management system 218 to begin deploying requests and responses, once the buffer management system 218 receives a message from the connection management system 216 that the connection has been re-established. Additionally, deployment instructions generated by the connection management system 216 can instruct the buffer management system to 218 to begin sending request and/or responses immediately if it is determined that the connection remains intact between the client device 204 and the data provider system 206.

In an example of operation of the example system shown in FIG. 2, the client device 204 generates requests and responses. Further in the example of operation, the data provider system 206 generates requests and responses. A connection is established between the client device 204 and the data provider system 206. Also in the example of operation, the connection virtualization system 208 is implemented as an intermediate node within the connection between the client device 204 and the data provider system 206. Requests and response generated by the data provider system 206 and the client device 204 are sent to each other over a connection formed through the connection virtualization system 208.

Further in the example of operation of the example system shown in FIG. 2, the request interception engine 210 intercepts requests generated by either or both the client device 204 and the data provider system 206 as they are sent over the connection formed between the client device 204 and the data provider system 206. Still further in the example of operation, the response interception engine 212 intercepts responses generated by either or both the client device 204 and the data provider system 206 as they are sent over a connection formed between the client device 204 and the data provider system 206. Further in the example of operation, the request interception engine 210 and the response interception engine 212 store corresponding intercepted requests and responses in the local datastore 214. The connection management system 216 monitors a connection between the client device 204 and the data provider system 206 to determine if the connection remains intact and generates data deployment instructions based on the monitoring of the connection. Still further in the example of operation, the buffer management system 218 uses deployment instructions generated by the connection management system 216 to send intercepted responses and requests to appropriate recipients.

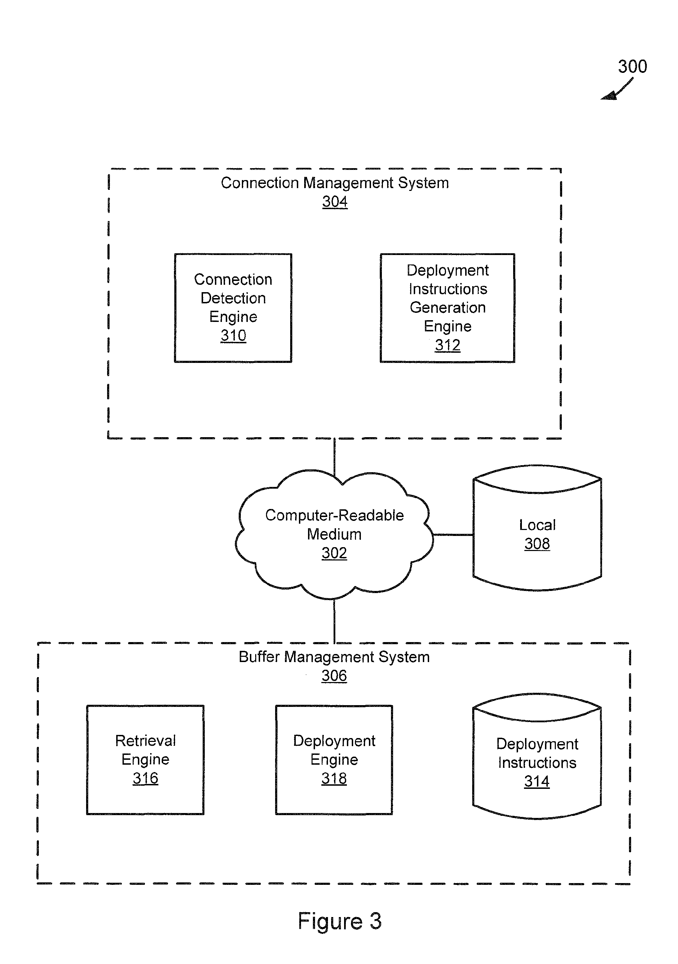

FIG. 3 depicts a diagram 300 of an example of a system for generating deployment instructions and deploying locally stored intercepted requests and responses based on the deployment instructions. The example system shown in FIG. 3 includes a computer-readable medium 302, a data a connection management system 304, a buffer management system 306, and a local datastore 308. The connection management system 304, the buffer management systems 306, and the local datastore 308 are coupled to each other through the computer-readable medium 302.

In a specific implementation, the connection management system 304 functions according to an applicable system for monitoring and managing a connection, such as the connection management systems described in this paper. The connection management system 304 can monitor and manage a connection formed between a client device and a data provider system. In an example, the connection management system 304 monitors and manages a connection, between a client device and a data provider system, which is established and maintained in accordance with a stateful communication protocol, such as TCP. Additionally, the connection management system 304 can be implemented as part of an intermediate node within a connection formed between a client device and a data provider system.

In a specific implementation, the buffer management system 306 functions according to an applicable system for buffering data sent over a network, such as the buffer management systems described in this paper. The buffer management system 306 can manage the sending of responses and requests sent over a connection formed between a client device and a data provider system. In an example, the buffer management system 306 manages the sending of responses and request sent over a connection, between a client device and a data provider system, that is established and maintained in accordance with a stateful communication protocol, such as TCP. In managing the sending of response and requests sent over a connection formed between a client device and a data provider system, the buffer management system 306 can be implemented as an intermediate node within the connection formed between a client device and a data provider system.

In a specific implementation, the local datastore 308 functions according to a datastore that stores data locally, such as the local datastores described in this paper. In storing data locally, the local datastore 308 can be implemented as part of the same system in which the connection management system 304 and the buffer management system 306 are implemented. Additionally, the local datastore 308 can be within the same LAN as the connection management system 304 and the buffer management system 306. The local datastore 308 can also be within the same LAN as a client device. In storing data locally, the local datastore 308 can function to store responses and requests. In one example, the responses and requests are intercepted by request and response interception engines. In another example, the responses and requests are preprogrammed or predetermined responses or requests, such as null or blank messages.

In the example system shown in FIG. 3, the connection management system 304 includes a connection detection engine 310 and a deployment instructions generation engine 312. In a specific implementation, the connection detection engine 310 functions to determine whether a connection between a client device and a data provider system has been established. In determining whether a connection between a client device and a data provider system has been established, the connection detection engine 310 can determine whether a portion of the connection between the client device and the data provider system has been established to determine whether the connection between the client device and the data provider system has been established. In determining whether a portion of a connection between a client device and a data provider system has been established, the connection detection engine 310 can determine whether a connection between the connection management system 304 and a client device has been established. Further in determining whether a portion of a connection between a client device and a data provider system has been established, the connection detection engine 310 can determine whether the connection between the connection management system 304 and the data provider system has been established. The connection detection engine 310 can determine whether a connection between a client device and a data provider system has been established after responses and requests have been deployed to appropriate recipients for initially establishing a connection between the client device and the data provider system.

In a specific implementation, the connection detection engine 310 functions to determine whether a connection between a client device and a data provider system has broken. In determining whether a connection between a client device and a data provider system has broken, the connection detection engine 310 can determine whether a portion of the connection between the client device and the data provider system has broken. In determining whether a portion of a connection between a client device and a data provider system has broken, the connection detection engine 310 can determine whether a connection between the connection management system 304 and a client device has broken. Further in determining whether a portion of a connection between a client device and a data provider system has broken, the connection detection engine 310 can determine whether a connection between the connection management system 304 and the data provider system has broken. The connection detection engine 310 can determine whether a connection between a client device and a data provider system is a half-open connection, thereby breaking the connection between the client device and the data provider system. The connection detection engine 310 can also determine whether a connection between a client device and a data provider system is a half-open connection, thereby breaking the connection between the client device and the data provider system.

In a specific implementation, the connection detection engine 310 determines whether a connection between a client device and a data provider system has been established or is intact based on deployment instructions for the buffer management system 306 to send a request or a response to either or both the client device and the data provider system. Depending upon implementation-specific, configuration-specific, or other considerations, the connection detection engine 310 can determine whether a connection between a client device and a data provider system is intact or has been established based on whether responses and requests that deployment instructions specify the buffer management system 306 to send are actually sent and received successfully by appropriate recipients. In one example, deployment instructions instruct the buffer management system 306 to send a request that is a blank message. In another example, deployment instructions instruct the buffer management system 306 to send a request that is a null message.

In a specific implementation, the connection detection engine 310 determines whether a connection between a client device and the data provider system has been established or is intact based on whether a response to a deployed request is received. Depending upon implementation-specific, configuration-specific, or other considerations, the connection detection engine 310 can determine whether the connection between the client device and the data provider system is intact based on whether an error response is returned after the buffer management system 306 sends a request or a response to either or both a client device and a data provider system in accordance with deployment instructions generated by the connection management system 304. For example, if an error response is returned indicating that a request or response was not received or transmitted to its appropriate recipient, then the connection detection engine 310 can determine that the connection between a client device and a data provider system has broken. Depending upon implementation-specific, configuration-specific, or other considerations, the connection detection engine 310 can determine whether the connection between the client device and the data provider system is intact based on whether an acknowledgment response is intercepted after the buffer management system 306 sends a request or a response to either or both a client device and a data provider system in accordance with deployment instructions generated by the connection management system 304. For example, if an acknowledgment response is returned indicating that a request or a response was received by the appropriate recipient, then the connection detection engine 310 can determine that the connection between a client device and a data provider system has broken.

In a specific implementation, the connection detection engine 310 determines whether a connection between a client device and a data provider system has been established or is intact by using a timer. In using a timer to determine whether a connection between a client device and a data provider system has been established or is intact, the connection detection engine 310 can determine whether the connection between the client device and the data provider system is intact using a timer and requests, and/or responses sent by the buffer management system 306. For example, the connection detection engine 310 can determine whether a connection between a client device and a data provider system is intact based on whether an acknowledgment response is received within a specific amount of time, monitored by the timer, after a request or response is sent to the appropriate recipient. In one example, if the buffer management system 306 sends a request or response to an appropriate recipient and an acknowledgment response for the sent request and/or response is not received or intercepted by a request interception engine in 0.5 seconds, then the connection detection engine 310 can determine that a connection is broken.

In a specific implementation, the deployment instructions generation engine 312 functions to generate deployment instructions. Depending upon implementation-specific, configuration-specific, or other considerations, the deployment instructions generation engine 312 can generate deployment instructions based on whether a connection between a client device and a data deployment system has been established or is intact, as is determined by the connection detection engine 310. The deployment instructions generation engine 312 can generate connection establishment deployment instructions if it is determined by the connection detection engine 310 that a connection between a client device and a data deployment system has not been established or is otherwise broken in order to establish or re-establish the connection. Additionally, the deployment instructions generation engine 312 can generate deployment instructions that include requests and/or responses, that in being deployed to an appropriate recipient, are used by the connection detection engine 310 to determine whether a connection is intact. The deployment instructions generation engine 312 can generate deployment instructions that instruct to begin deployment of requests and/or responses stored in the local datastore 308, once it is determined by the connection detection engine 310 that a connection between a client device and a data provider system is intact.

In a specific implementation, the deployment instructions generation engine 312 generates deployment instructions that include a deployment order. A deployment order is the order in which the buffer management system 306 should send locally stored requests and/or responses to an appropriate recipient. The deployment instructions generation engine 312 can generate a deployment order based on an order in which locally stored requests and responses are intercepted. The deployment instructions generation engine 312 can also generate a deployment order based on an order in which locally stored requests and responses are needed by an appropriate recipient. For example, if a response to a request for data is needed to continue running an application on a client device, the response can be placed first or high in the deployment order.

In the example system shown in FIG. 3, the buffer management engine 306 includes a deployment instructions datastore 314, a retrieval engine 316, and a deployment engine 318. In a specific implementation, the deployment instructions datastore 314 functions to store deployment instructions. Deployment instructions stored in the deployment instructions datastore 314 can be generated by the deployment instructions generation engine 312 and received from the connection management system 304.

In a specific implementation, the retrieval engine 316 functions to retrieve responses and requests according to data deployment instructions stored in the deployment instructions datastore 314. The retrieval engine 316 can retrieve responses and requests stored in the local datastore 308. Further, the retrieval engine 316 can retrieve response and requests stored in the local datastore 308 based on deployment instructions stored in the deployment instructions datastore 314. For example, data deployment instructions can instruct to send response A and the retrieval engine 316 can retrieve response A from the local datastore 308.

In a specific implementation, the deployment engine 318 sends request and/or responses retrieved by the retrieval engine 316 to appropriate recipients. The deployment engine 318 can send requests and/or responses according to deployment instructions stored in the deployment instructions datastore 314. Additionally, the deployment engine 318 can send requests and/or responses according to a deployment order included as part of deployment instructions.

In an example of operation of the example system shown in FIG. 3, the local datastore 308 stores requests and responses. Further in the example of operation, the connection detection engine 310 determines whether a connection between a client device and a data provider system, in which both the connection management system 304 and the buffer management system 306 are implemented as part of an intermediate node, remains intact. Still further in the example of operation, the deployment instructions generation engine 312 generates deployment instructions, at least in part, based on whether the connection detection engine 310 determines that a connection is intact. The deployment instructions datastore 314 stores deployment instructions generated by the deployment instructions generation engine 312. Further in the example of operation, the retrieval engine 316 retrieves responses and requests from the local datastore 308 based on deployment instructions stored in the deployment instructions datastore 314. Still further in the example of operation, the deployment engine 318 sends responses and requests retrieved by the retrieval engine 316 to appropriate recipients based on deployment instructions stored in the deployment instructions datastore 314.

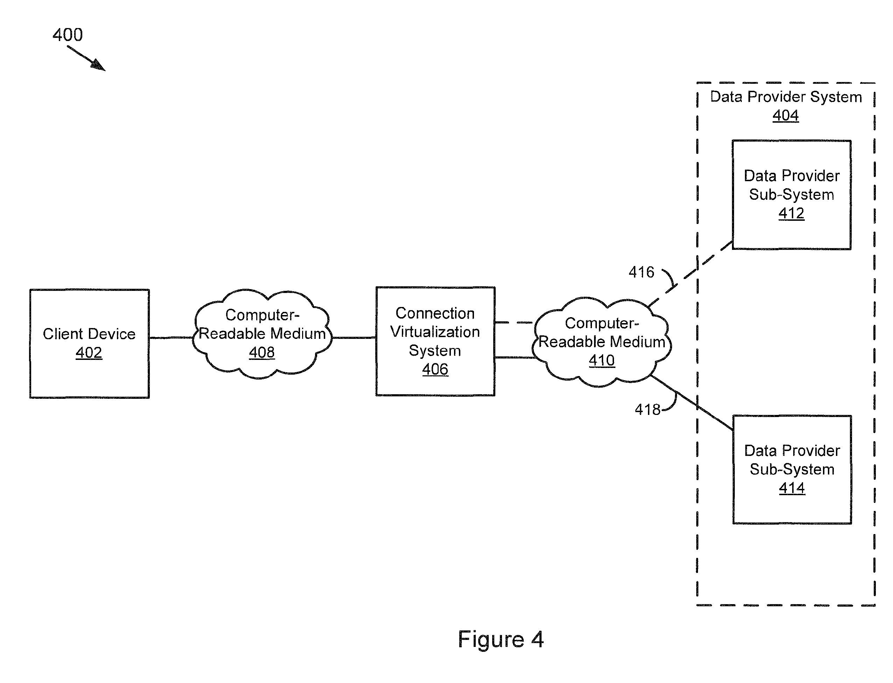

FIG. 4 depicts a diagram 400 of an example of a system in which a connection, for which a virtualized connection is created, is re-established. The example system shown in FIG. 4 includes a client device 402, a data provider system 404, a connection virtualization system 406, a computer-readable medium 408, and a computer-readable medium 410. In the example system shown in FIG. 4, the connection virtualization system 406 is coupled to the client device 402 through the computer-readable medium 408. The connection virtualization system 406 is also coupled to the data provider system 404 through the computer- readable medium 410.

In a specific implementation, the client device 402 functions according to an applicable device for generating, sending, and receiving data, such as the client devices described in this paper. Depending upon implementation-specific, configuration-specific, or other considerations, the client device 402 generates, sends, and receives data over a connection established in accordance with a stateful communication protocol, such as TCP. For example, the client device 402 generates and sends requests and responses in accordance with a stateful communications protocol. In another example, the client device 402 receives requests and responses in accordance with a stateful communication protocol.

In a specific implementation, the data provider system 404 functions according to an applicable system for generating, sending, and receiving data, such as the data provider systems described in this paper. Depending upon implementation-specific, configuration-specific, or other considerations, the data provider system 404 generates, sends, and receives data over a connection established according to a stateful communication protocol, such as TCP. In one example, the data provider system 404 receives requests and responses in accordance with a stateful communication protocol. In another example, the data provider system 404 generates and sends requests and responses in accordance with a stateful communication protocol.

In a specific implementation the connection virtualization system 406 functions according to an applicable system for creating a virtualized connection, such as the connection virtualization systems described in this paper. The connection virtualization system 406 is an intermediate node in a connection formed between the client device 402 and the data provider system 404. In one example, the computer-readable medium 408 through which the connection virtualization system 406 is coupled to the client device 402 forms part of a LAN. In another example, the computer-readable medium 410, through which the connection virtualization system 406 is coupled to the data provider system 404 forms part of a WAN.

In the example system shown in FIG. 4, the data provider system 404 includes a first data provider sub-system 412 and a second data provider sub-system 414. In a specific implementation, the first data provider sub-system 412 and the second data provider sub-system functions according to systems for providing data, such as the data provider systems described in this paper. In one example, the first data provider sub-system 412 and the second data provider sub-system 414 are different server farms included as part of the data provider system 404. In another example, the first data provider sub-system 412 and the second data provider sub-system 414 are different servers within a server farm of the data provider system 404.

In a specific implementation, a connection between the client device 402 and the data provider system 404 is formed, in part, through an initial connection, represented by dashed line 416, between connection virtualization system 406 and the first data provider sub-system 412 through the computer-readable medium 410. Still further in the specific implementation, the initial connection 416 is broken and the connection virtualization system 406 is connected through a re-established connection, represented by line 418, to the second data provider sub-system 414. In one example, the initial connection 416 is broken because computing and/or data serving capacity of the first data provider sub-system 412 is reached, and the first data provider sub-system 412 can no longer generate requests and responses to requests in a timely manner. Further, the data provider system 404 re-establishes a connection with the connection virtualization system 406 by connecting the connection virtualization system 406 to the second data provider sub-system 414 that has available computing or data serving capacity. Therefore, a connection between the client device 402 and the data provider system 404 is reformed through the re-established connection 418 between the connection virtualization system 406 and the data provider system 404, in particular the second data provider sub-system 414.

In an example of operation, the connection virtualization system 406 creates a virtualized connection of the connection between the client device 402 and the data provider system 404 after the initial connection 416 is broken and the re-established connection 418 is formed. In one example, the connection virtualization system 406 intercepts responses and requests to be sent over the initial connection 416. In another example, the connection virtualization system 406 stores the intercepted responses and requests in a local datastore. Still further in the example, the connection virtualization system 406 deploys intercepted responses and requests according to deployment instructions. Deployment instructions can instruct the connection virtualization system 406 to deploy responses and requests that were initially destined for the first data provider sub-system 412 to the second data provider sub-system 414 once the re-established connection 418 is formed. Additionally, deployment instructions can instruct the connection virtualization system 406 to deploy the intercepted responses and requests that were destined for the first data provider sub-system 412 and not received by the first data provider sub-system 412 to the second data provider sub-system 414. Furthermore, deployment instructions can instruct the connection virtualization system 406 to deploy intercepted requests to the second data provider sub-system 414 that the first data provider sub-system 412 does not completely satisfy or fulfill with corresponding requests and/or responses. For example, if a request for data includes a request for data A and data B and the first data provider sub-system 412 only sends a response that includes data A before the initial connection is broken, then the connection virtualization system 406 can send the request for data that include a request for data A and data B to the second data provider sub-system 414. The connection virtualization system 406 can also detect that the initial connection 416 has broken and that the re-established connection 418 needs to be formed. Further, the connection virtualization system can send requests and responses according to connection establishment deployment instructions instruct in forming the re-established connection 418.

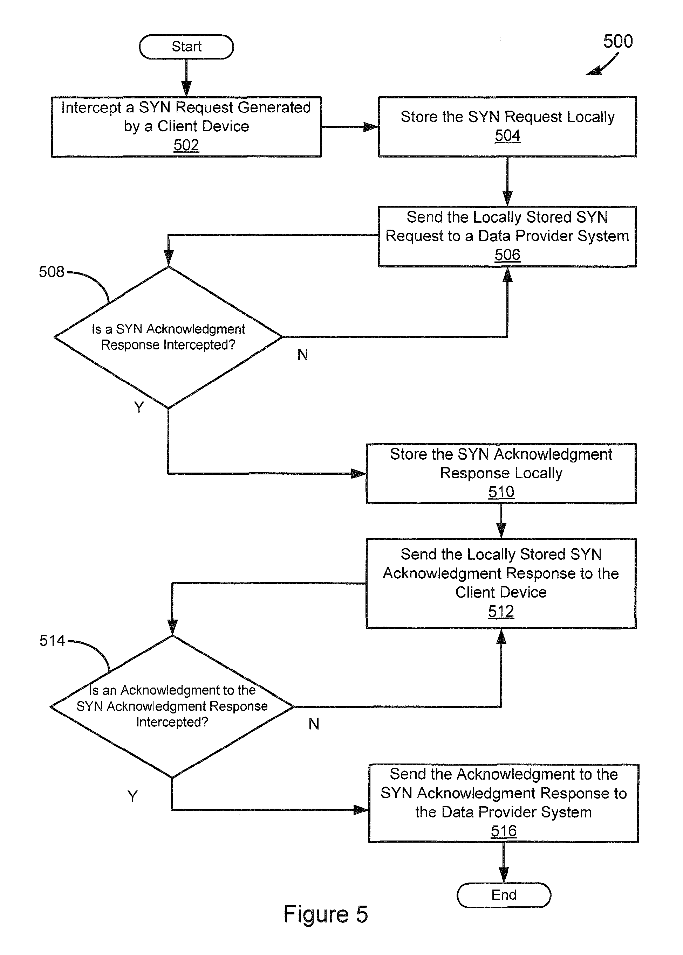

FIG. 5 depicts a flowchart 500 of an example of a method for establishing a connection using a connection virtualization system that is implemented as an intermediate node in establishing the connection. The flowchart 500 begins at module 502, where a SYN request generated by a client device is intercepted. An intercepted SYN request can be used to establish a connection between a client device and a data providing system. In one example, a SYN request is intercepted by a response interception engine of a connection virtualization system.

The flowchart 500 continues to module 504, where an intercepted SYN request is stored locally. In one example, an intercepted SYN request is stored in a local datastore that is implemented as part of a connection virtualization system. An intercepted SYN request can be stored in a local datastore by a request interception engine that intercepts the SYN request.

The flowchart 500 continues to module 506, where a locally stored SYN request is sent to a data provider system in which a connection is being established with the client device. A locally stored SYN request can be sent to a data provider system based on a header of a TCP segment that forms the SYN request. For example, a header of a TCP segment can identify the destination port of which to send a SYN request. In another example, a SYN request is sent to a data provider system by a buffer management system.

The flowchart 500 continues to decision point 508, where it is determined whether a SYN acknowledgment response is intercepted. A connection detection engine can determine whether a SYN acknowledgment response is intercepted. A SYN acknowledgment response can be generated in response to a data provider system receiving a SYN request sent at module 506. Additionally, whether a SYN acknowledgment response is intercepted can be used to determine whether a data provider system received the SYN request sent at module 508. If it is determined at decision point 508 that a SYN acknowledgement response was not intercepted, then the flowchart 500 continues back to module 506 where a locally stored SYN request is sent again to a data provider system.

If it is determined at decision point 508, that a SYN acknowledgement response was intercepted, then the flowchart 500 continues to module 510. At module 510, an intercepted SYN acknowledgment response is stored locally. In one example, an intercepted SYN acknowledgment response is stored locally by a response interception engine that intercepts the SYN acknowledgment response.

The flowchart 500 continues to module 512, where a locally stored SYN acknowledgment response is sent to a client device. A SYN acknowledgement response can be sent to a client device based on a header of a TCP segment that forms the SYN acknowledgement response. For example, a header of the TCP segment can identify the destination port to which to send a SYN acknowledgement response. A SYN acknowledgement response can be sent to a client device by a buffer management system.

The flowchart 500 continues to decision point 514 where it is determined whether an acknowledgment response, generated by a client device, to a SYN acknowledgment is intercepted. A connection detection engine can determine whether an acknowledgment response to a SYN acknowledgment response is intercepted. An acknowledgment response can be generated in response to a client device receiving a SYN acknowledgement response sent at module 512. Depending upon implementation-specific, configuration-specific, or other considerations, whether an acknowledgment response is intercepted is used to determine whether a client device received a SYN acknowledgement response sent at module 512. If it is determined at decision point 514 that an acknowledgement response in response to a SYN acknowledgement response was not intercepted, then the flowchart 500 continues back to module 512 where a locally stored SYN acknowledgement response is sent again to a client device.

If it is determined at decision point 514 that an acknowledgement response to a SYN acknowledgment response was intercepted, then the flowchart 500 continues to module 516. At module, the flowchart 500 includes sending an acknowledgement response to a SYN acknowledgement response to a data provider system. As a result, a three-way handshake occurs and a connection is established between a client device and a data provider system using a connection virtualization system.

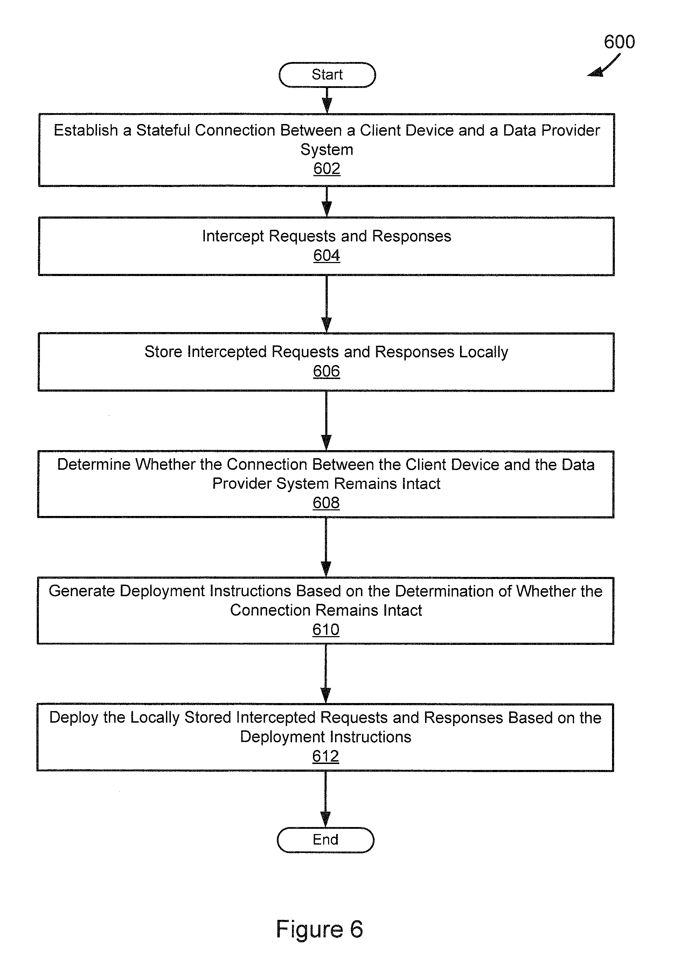

FIG. 6 depicts a flowchart 600 of an example of a method for creating a virtualized connection. The flowchart begins at module 602, where a stateful connection is established between a client device and a data provider system. In one example, a stateful connection is established with a connection virtualization system implemented as an intermediate node within the connection between a client device and a data provider system. In another example, a stateful connection is created in accordance with TCP.

The flowchart 600 continues to module 604, where requests and responses are intercepted. Intercepted requests and responses can be generated by a client device and a data provider system and sent through a stateful connection formed between the client device and the data provider system. Requests and responses can be intercepted by corresponding request and response interception engines that are included as part of a connection virtualization system. Intercepted requests and responses can include requests for data and responses to requests for data.

The flowchart 600 continues to module 606, where intercepted requests and responses are stored locally. Intercepted requests and responses can be stored in a local datastore that is included as part of the connection virtualization system. Intercepted requests and responses can also be stored in a local datastore that is implemented as part of or within the same LAN as a client device. Intercepted requests and response can be stored locally by a corresponding request interception engine and response interception engine that intercepts the requests and responses.

The flowchart 600 continues to module 608, where it is determined whether a connection between a client device and a data provider system remains intact. A connection detection engine can determine whether the connection between a client device and a data provider system remains intact. A connection detection engine can also determine whether a connection between a client device and a data provider system remains intact based on whether a response to a deployed request or response is received. Further, a connection detection engine can determine whether a connection between a client device and a data provider system remains intact based on whether an error is received after responses and requests are deployed to appropriate recipients. Additionally, a connection detection engine can determine whether a connection between a client device and a data provider system remains intact, based at least in part on a timer.

The flowchart 600 continues to module 610, where deployment instructions are generated based on a determination, made at module 608, as to whether a connection between a client device and a data provider system remains intact. If it is determined that a connection is intact, deployment instructions can specify to begin deploying locally stored requests and responses immediately to appropriate recipients. If it is determined that a connection is broken, deployment instructions can specify to begin deploying locally stored requests and responses once it is determined that the connection has been re-established. Further if it is determined that a connection is broken, then deployment instructions can specify to deploy locally stored requests and responses used in re-establishing the connection.

The flowchart 600 continues to module 612, where locally stored intercepted requests and response are deployed based on deployment instructions generated at module 610. Locally stored intercepted requests and responses can be retrieved from local storage by a retrieval engine. After locally stored requests and response are retrieved from local storage, a deployment engine can deploy the locally stored requests and responses to appropriate recipients.

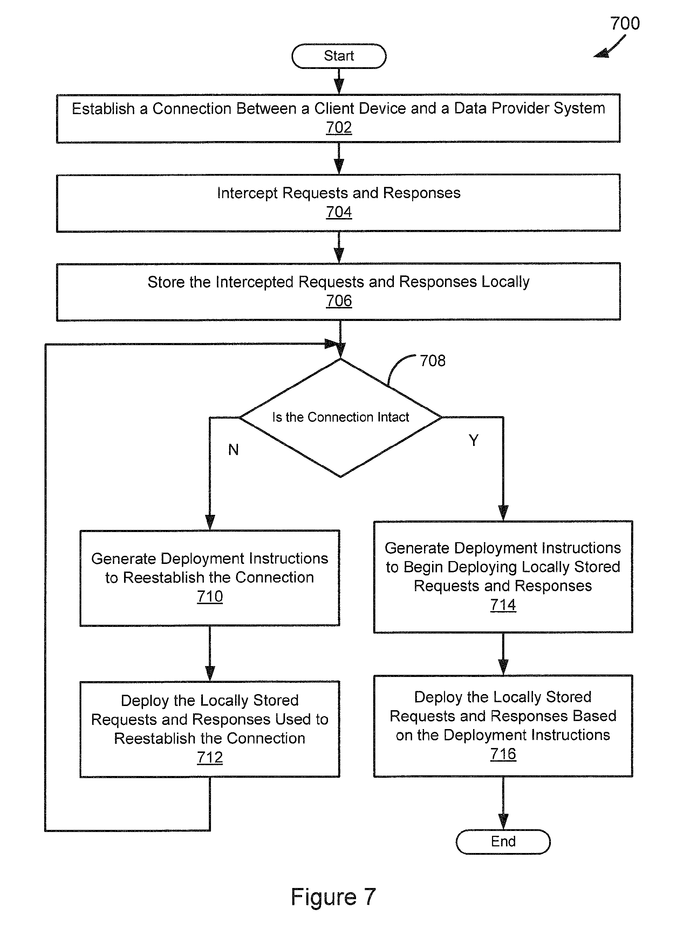

FIG. 7 depicts a flowchart 700 of an example of a method for re-establishing a connection using a connection virtualization system. The flowchart 700 begins at module 702, with establishing a connection between a client device and a data provider system. A connection can be established between a client device and a data provider system through a connection virtualization system implemented as an intermediate node in the connection between the client device and the data provider system. A connection established between a client device and a data provider system can be a stateful connection created and maintained in accordance with a stateful communication protocol, such as TCP.

The flowchart 700 continues to module 704, where requests and responses are intercepted. Intercepted requests and responses can be generated by a client device and a data provider system and sent through a connection formed between the client device and the data provider system. Requests and responses can be intercepted by corresponding request and response interception engines that are included as part of a connection virtualization system. Intercepted requests and responses can include requests for data and responses to requests for data.

The flowchart 700 continues to module 706, where the intercepted requests and responses are stored locally. Intercepted requests and responses can be stored in a local datastore that is included as part of a connection virtualization system. Additionally, intercepted requests and responses can be stored in a local datastore that is implemented as part of or within the same LAN as a client device. Intercepted requests and responses can be stored locally by a corresponding request interception engine or response interception engine that intercepts the requests or responses.

The flowchart 700 continues to decision point 708 where it is determined whether a connection between a client device and a data provider system remains intact. A connection detection engine can determine whether the connection between a client device and a data provider system remains intact. A connection detection engine can determine whether a connection between a client device and a data provider system remains intact based on whether a response to a deployed request or response is received from an appropriate recipient. Additionally, a connection detection engine can determine whether a connection between a client device and a data provider system remains intact based on whether an error is received after responses and requests are deployed to an appropriate recipient. A connection detection engine can also determine whether a connection between a client device and a data provider system remains intact, based at least in part on a timer.

If it is determined at decision point 708 that the connection is broken, then the flowchart 700 continues to module 710. At module 710, deployment instructions are created to re-establish a connection between a client device and a data provider system. Deployment instructions can be connection establishment deployment instructions that specify to deploy locally stored responses and/or requests used to establish a connection at module 702.

The flowchart 700 continues to module 712, where locally stored requests and responses are deployed to re-establish a connection between a client device and a data provider system. Locally stored requests and responses can be retrieved from a local datastore by a retrieval engine. Further locally stored requests and responses can be deployed by a deployment engine. After module 712, the flowchart 712 continues back to decision point 708 where it is determined whether a connection between a client device and a data provider system is intact, or otherwise has been re-established.

If it is determined at decision point 708 that a connection between a client device and a data provider system is intact, then the flowchart 700 continues to module 714. At module 714, deployment instructions are generated that specify to begin deploying locally stored requests and responses. Deployment instructions can include a deployment order in which a deployment engine should deploy the locally stored requests and responses.

The flowchart 700 then continues to module 716, where locally stored requests and responses are deployed based on deployment instructions. Locally stored requests and responses can be deployed by a deployment engine. A deployment engine can deploy locally stored requests and responses according to a deployment order, included as part deployment instructions.

Embodiments of the present invention further comprise a system comprising means for performing the operations recited in any of the method claims, as well as a use of one or more processors for performing the operations recited in any of the method claims.

These and other examples provided in this paper are intended to illustrate but not necessarily to limit the described implementation. As used herein, the term "implementation" means an implementation that serves to illustrate by way of example but not limitation. The techniques described in the preceding text and figures can be mixed and matched as circumstances demand to produce alternative implementations.

## Claims

1. A method comprising:
establishing a stateful connection between a client device and a data provider system through a connection virtualization system;
intercepting requests, responses, or a combination of requests and responses sent over the stateful connection between the client device and the data provider system through the connection virtualization system;
storing the intercepted requests, responses, or a combination of requests and responses locally;
determining whether the stateful connection between the client device and the data provider system is intact;
generating deployment instructions to deploy locally stored intercepted requests, responses, or a combination of requests and responses based on whether it is determined that the stateful connection between the client device and the data provider system is intact;
deploying the locally stored intercepted requests, responses, or a combination of requests and responses in accordance with the deployment instructions.

2. The method of claim 1, wherein if it is determined that the stateful connection between the client device and the data provider system is intact, generating the deployment instructions that specify to:
retrieve the locally stored intercepted requests, responses, or a combination of requests and responses from a local datastore;
begin deploying retrieved locally stored intercepted requests, responses, or a combination of requests and responses.

3. The method of claim 1 or claim 2, wherein if it is determined that the stateful connection between the client device and the data provider system is broken, generating deployment instructions that specify to:
retrieve the locally stored intercepted requests, responses, or a combination of requests and responses from a local datastore;
begin deploying retrieved locally stored intercepted requests, responses, or a combination of requests and responses once the stateful connection between the client device and the data provider system is re-established.

4. The method of claim 1 or claim 2, wherein if it is determined that the stateful connection between the client device and the data provider system is broken, generating deployment instructions that specify to:
retrieve the locally stored intercepted requests, responses, or a combination of requests and response, including intercepted requests, requests, or a combination of requests and responses used to establish the stateful connection initially;
begin deploying retrieved locally stored intercepted requests, responses, or a combination of requests and responses used to establish the stateful connection initially to re-establish the stateful connection;
begin deploying the retrieved locally stored intercepted requests, responses, or a combination of requests and responses once the stateful connection between the client device and the data provider system is re-established.

5. The method of claim 3 or claim 4, wherein the stateful connection between the client device and the data provider system is broken as a result of breaking a connection between the connection virtualization system and a first data provider sub-system of the data provider system, and the stateful connection between the client device and the data provider system is re-established as a result of forming a connection between the connection virtualization system and a second data provider sub-system of the data provider system.

6. The method of claim 1, wherein establishing the stateful connection between the client device and the data provider system through the connection virtualization system further comprises;
intercepting requests, responses, or a combination of requests and responses generated by either or both the client device and the data provider system and used to establish the stateful connection between the client device and the data provider system;
storing the intercepted requests, responses, or a combination of requests and responses used to establish the stateful connection locally;
determining whether the stateful connection between the client device and the data provider system is established;
if it is determined that the stateful connection between the client device and the data provider system is not established:
generating connection establishment deployment instructions that specify to retrieve locally stored intercepted requests, responses, or a combination of requests and responses used in establishing the stateful connection and begin deploying retrieved locally stored intercepted requests, responses, or a combination of requests and responses used in establishing the stateful connection;
deploying retrieved locally stored intercepted requests, responses, or a combination of requests and responses used in establishing the stateful connection to appropriate recipients in accordance with the connection establishment deployment instructions.

7. A system comprising:
a request interception engine configured to intercept requests sent over a stateful connection established between a client device and a data provider system through a connection virtualization system and store intercepted requests in a local datastore;
a response interception engine configured to intercept responses sent over the stateful connection established between the client device and the data provider system through the connection virtualization system and store intercepted responses in a local datastore;
a connection detection engine configured to determine whether the stateful connection between the client device and the data provider system is intact;
a deployment instructions generation engine configured to generate deployment instructions to deploy locally stored intercepted requests, responses, or a combination of requests and responses based on whether the connection detection engine determines that the stateful connection between the client device and the data provider system is intact;
a buffer management system configured to deploy the locally stored intercepted requests, responses, or combination of requests and responses in accordance with the deployment instructions.

8. The system of claim 7, wherein if the connection detection engine determines that the stateful connection between the client device and the data provider system is intact, the deployment instructions generation engine is configured to generate deployment instructions that instruct the buffer management system to:
retrieve the locally stored intercepted requests, responses, or a combination of requests and responses from a local datastore;
begin deploying retrieved locally stored intercepted requests, responses, or a combination of requests and responses.

9. The system of claim 7 or claim 8, wherein if the connection detection engine determines that the stateful connection between the client device and the data provider system is broken, the deployment instructions generation engine is configured to generate deployment instructions that instruct the buffer management system to:
retrieve the locally stored intercepted requests, responses, or a combination of requests and responses from a local datastore;
begin deploying retrieved locally stored intercepted requests, responses, or a combination of requests and responses once the stateful connection between the client device and the data provider system is re-established.

10. The system of claim 7 or claim 8, wherein if the connection detection engine determines that the stateful connection between the client device and the data provider system is broken, the deployment instructions generation engine is configured to generate deployment instructions that instruct the buffer management system to:
retrieve the locally stored intercepted requests, responses, or a combination of requests and response, including intercepted requests, requests, or a combination of requests and responses used to establish the stateful connection initially;
begin deploying retrieved locally stored intercepted requests, responses, or a combination of requests and responses used to establish the stateful connection initially to re-establish the stateful connection;
begin deploying the retrieved locally stored intercepted requests, responses, or a combination of requests and responses once the stateful connection between the client device and the data provider system is re-established.

11. The system of claim 9 or claim 10, wherein the data provider comprises a first data provider sub-system and a second data provider sub-system, and the stateful connection between the client device and the data provider system is broken as a result of breaking a connection between the connection virtualization system and the first data provider sub-system of the data provider system, and the stateful connection between the client device and the data provider system is re-established as a result of forming a connection between the connection virtualization system and the second data provider sub-system of the data provider system.

12. The method of claim 3 or claim 4, or the system of claim 9 or claim 10, wherein the deployment instructions specify to retrieve and deploy locally stored intercepted requests, responses, or combinations of requests and responses that were not received by appropriate recipients of the locally stored intercepted requests, responses, or combination of requests and responses.

13. The method of claim 3 or claim 4, or the system of claim 9 or claim 10, wherein the deployment instructions specify to retrieve and deploy locally stored intercepted requests for which responses were not received from appropriate recipients of the requests.

14. The method of any of claims 1-6, or the system of any of claims 7-11, wherein the deployment instructions specify the deployment order in which to deploy the locally stored intercepted requests, responses, or a combination of requests and responses.

15. The method of any of claims 1-6, or the system of any of claims 7-11, wherein the stateful connection between the client device and the data provider system is created through the connection virtualization system in accordance with the transmission control protocol.
